# EUROPEAN PATENT SPECIFICATION

(11) **EP 2 953 347 B1**
(45) Date of publication and mention of the grant of the patent: **28.12.2016**
(21) Application number: 15162860.9
(22) Date of filing: 08.04.2015
(51) Int. Cl.: H04N 5/232, G08G 1/054, G03B 13/00, G03B 15/06, G03B 19/00

(54) **PHOTOGRAPHING CONTROL METHOD AND APPARATUS**
METHOD UND APPARAT ZUM FOTOGRAFIEREN
PROCÉDÉ ET APPAREIL PHOTO

(30) Priority: 03.06.2014 CN 201410242824
(43) Date of publication of application: 09.12.2015
(73) Proprietor: Xiaomi Inc., Beijing 100085 (CN)
(72) Inventor: TANG, Mingyong, Beijing (CN); LIU, Huayijun, Beijing (CN); LIU, Xiao, Beijing (CN)
(74) Representative: Hanna, Peter William Derek

(56) References cited:
- WO-A1-97/33262
- WO-A1-2013/148591
- US-A1- 2010 007 748
- US-A1- 2010 110 178

## Description

### TECHNICAL FIELD

The present disclosure relates to the field of photography and, more particularly, to a focusing control method when photographing a moving object, using a mobile apparatus or terminal equipped with a camera.

### BACKGROUND

With the popularity of mobile terminals such as smart phones and tablet computers etc., it is very convenient to shoot videos and upload videos to a video website. More and more users are accustomed to shoot video or pictures through the mobile terminal to record the things of daily life.

In the existing focusing technologies applied to most mobile terminal applications, some have to be operated manually, such as tapping on a touch control of focusing functions with tedious operation steps which is time-consuming; others can focus again after automatic adjustment is repeated on the defocus picture, but the time for adjusting focus is longer. In the actual process, because of this time lag, the picture captured when the object to be photographed moves may not be the best image to be captured. Therefore, the existing focusing technologies often fail to capture the best image when the object to be photographed moves, especially for an ongoing movement during a focusing operation.
The present state of the art is represented by WO 2013/148591A, US 2010/007748A, US 2010/110178A, WO 97/33262A.

### SUMMARY

In order to solve the problem in the existing focusing technologies, the present invention provides a photographing control and an apparatus in accordance with the claims which follow.
According to a first aspect of the embodiments of the present disclosure, a photographing control method applied to a terminal is provided. The method includes: obtaining a movement speed of an object in a picture to be photographed by the terminal;
determining whether the movement speed is within a preset speed range; and focusing on the object if the movement speed is within the preset speed range.

Incorporated with the first aspect, in a first implementation of the first aspect, the method further includes: taking photo or video for the object after focusing on the object.

Incorporated with the first aspect, in a second implementation of the first aspect, the method further includes: identifying a type of the object; determining whether the type of the object is a preset type; and focusing on the object if the type of the object is the preset type.

Incorporated with the first aspect, in a third implementation of the first aspect, the method further includes: respectively recording movement speeds of the object in a plurality of moments; calculating a preset speed range according to the movement speeds of the object obtained in the plurality of moments.

Incorporated with the first aspect, in a fourth implementation of the first aspect, the picture to be photographed by the terminal of the terminal includes a plurality of objects and the method further includes: selecting a target object from the plurality of objects in the picture to be photographed by the terminal; respectively obtaining movement speeds of the target object in a plurality of moments; and calculating a preset speed range according to the movement speeds of the object obtained in the plurality of moments.

Incorporated with the first aspect, in a fifth implementation of the first aspect, selecting a target object from the plurality of objects in the picture to be photographed by the terminal includes: selecting an object focused on currently in the picture to be photographed by the terminal as the target object.

Incorporated with the first aspect, in a sixth implementation of the first aspect, obtaining the movement speed of an object in the picture to be photographed by the terminal includes: receiving a movement speed of an entity corresponding to the object measured by a velocity measurement; or, calculating a shift speed of the object in the picture to be photographed, and taking the shift speed as the movement speed of the object; or, calculating a shift speed of the object in the picture to be photographed, obtaining the distance between an entity corresponding to the object and the terminal, and calculating the movement speed of the object according to the shift speed and the distance.

Incorporated with the first aspect, in a seventh implementation of the first aspect, focusing on the object includes: calculating a rotation direction and a rotation distance of a lens of the terminal relative to the terminal according to the movement speed; and controlling the lens to rotate relative to the terminal according to the calculated rotation direction and the rotation distance; or, calculating a movement direction and a movement distance of the terminal relative to the object according to the movement speed; and controlling the terminal to move relative to the object according to the calculated movement direction and the movement distance.

According to a second aspect of the embodiments of the present disclosure, a photographing control apparatus applied to a terminal is provided. The apparatus includes a movement speed obtaining unit configured to obtain a movement speed of an object in a picture to be photographed by the terminal; a movement speed determining unit configured to determine whether the movement speed is within a preset speed range; and a focus length control unit configured to focus on the object if the movement speed is within the preset speed range.

Incorporated with the second aspect, in a first implementation of the second aspect, the apparatus further includes: a photographing control unit configured to take photo or video for the object after focusing on the object.

Incorporated with the second aspect, in a second implementation of the second aspect, the apparatus further includes: an identification unit configured to identify a type of the object; and a type determining unit configured to determine whether the type of the object is a preset type. The focus length control unit focuses on the object if the type of the object is the preset type.

Incorporated with the second aspect, in a third implementation of the second aspect, the apparatus further includes: a first movement speed record unit configured to respectively record movement speeds of the object in a plurality of moments; and a first preset speed range obtaining unit configured to obtain a preset speed range according to the movement speeds of the object obtained in the plurality of moments.

Incorporated with the second aspect, in a fourth implementation of the second aspect, the picture to be photographed by the terminal includes a plurality of objects. and the apparatus further includes: a target object selection unit configured to select a target object from the plurality of objects in the picture to be photographed by the terminal; a second movement speed record unit configured to respectively record the movement speeds of the target object in the plurality of moments; and a second preset speed range obtaining unit configured to obtain a preset speed range according to the movement speeds of the target object obtained in the plurality of moments.

Incorporated with the second aspect, in a fifth implementation of the second aspect, the target object selection includes: a selection sub-unit configured to select the object focused on currently in the picture to be photographed by the terminal as the target object.

Incorporated with the second aspect, in a sixth implementation of the second aspect, the movement speed obtaining unit includes: a movement speed receiver sub-unit configured to receive the movement speed of an entity corresponding to the object measured by a velocity measurement equipment; or, a shift speed calculation sub-unit configured to calculate a shift speed of the object in the picture to be photographed, which is taken as the movement speed; or, a movement speed calculation sub-unit configured to calculate a shift speed of the object in the picture to be photographed; to obtain a distance between the entity corresponding to the object and the terminal; and to calculate the movement speed of the object according to the shift speed and the distance.

Incorporated with the second aspect, in a seventh implementation of the second aspect, the focus length control unit includes: a rotation parameter calculation sub-unit configured to calculate a rotation direction and a rotation distance of a lens of the terminal relative to the terminal, and a rotation control sub-unit configured to control the lens of the terminal to rotate relative to the terminal according to the calculated rotation direction and the rotation distance; or, a movement parameter calculation sub-unit configured to calculate a movement direction and a movement distance of the terminal relative to the object, and a movement control sub-unit configured to control the terminal to move relative to the object according to the calculated movement direction and the movement distance.

According to a third aspect of the embodiments of the present disclosure, a terminal is provided. The terminal includes: a processor; and a memory used to store performable instructions of the processor. The processor is configured to: obtain the movement speed of an object in the picture to be photographed by the terminal; determine whether the movement speed is within a preset speed range; and focus on the object if the movement speed is within the preset speed range.

The solutions according to embodiments of the disclosure may have the following advantages.

According to the method provided by this embodiment of the present disclosure, the movement speed of the object in the picture to be photographed is obtained, it is determined whether the movement speed is within a preset speed range according to the movement speed, and the object is focused on in the picture to be photographed if the speed within the preset speed range.

The movement speed of the object in the picture to be photographed may be served as the feedback and the focus process can be controlled; therefore, when the object in the picture is moving, the terminal camera can automatically follow the object and focus on the object, which makes the focus process be more automatic and less time-consuming.

Compared with the related technology, the focus process takes less time, the terminal camera can capture the best images or scenes in time during the movement of the object to be photographed, when the object to be photographed is moving.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a photographing control method according to an exemplary embodiment.
Fig. 2 is a flow chart showing a photographing control method according another exemplary embodiment.
Fig. 3 is a flow chart showing a photographing control method according still another exemplary embodiment.
Fig. 4 is a diagram showing a picture photographed according to an exemplary embodiment.
Fig. 5 is a flow chart showing a photographing control method according still another exemplary embodiment.
Fig. 6 is a diagram showing a picture photographed according another exemplary embodiment.
Fig. 7 is a flow chart showing a photographing control method according still another exemplary embodiment.
Fig. 8 is a diagram showing a picture photographed according still another exemplary embodiment.
Fig. 9 is a block diagram showing a photographing control apparatus according to an exemplary embodiment.
Fig. 10 is a block diagram showing a photographing control apparatus according to another exemplary embodiment.
Fig. 11 is a block diagram showing a terminal according to another exemplary embodiment.

### DESCRIPTION OF THE EMBODIMENTS

Detailed description of the present disclosure will further be made with reference to drawings in order to make the above objects, technical solutions and advantages of the present disclosure more apparent.

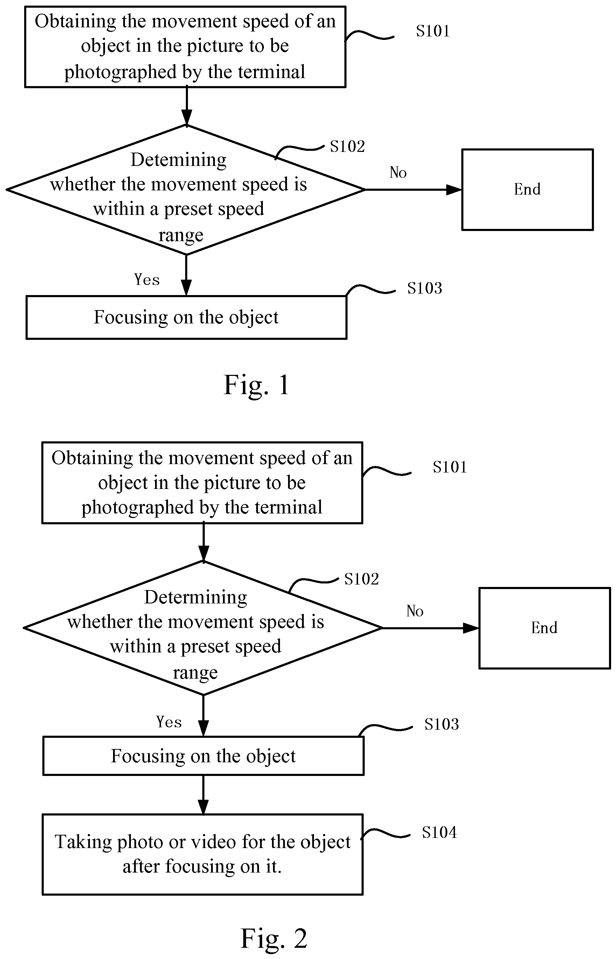

Fig. 1 is a flow chart showing a photographing control method according to an exemplary embodiment. As shown in Fig. 1, the photographing control method is used in the terminal, and comprises following steps.

Step S101, the movement speed of an object in a picture to be photographed by a terminal is obtained.

When taking photos of a building or other still life and a person with controlled poses, once the focus is completed the object in the in the picture to be photographed by the terminal is static, so the captured image is very clear. But in some movement scenarios, for example, taking photos or videos of sportsmen in action, racing cars at a racing track, or moving persons in a wedding, the object to be photographed is moving and the captured image will be fuzzy if a photo is taken with a preset focal length, unless firstly the movement speed of the object in the picture to be photographed by the terminal is obtained in this step.

The movement speed of the object in the picture to be photographed may be the shift speed of the object on the screen of the terminal, or the movement speed of the entity corresponding to the object in the picture to be photographed. For example, the movement speed of the entity corresponding to the object in the picture to be photographed may be directly measured by velocity measurement equipment (such as speed measuring radar); or the movement speed of the object on the screen may be measured firstly, and then the distance between the entity corresponding to the object in the picture to be photographed and the terminal is measured, and eventually the movement speed of the entity is obtained through indirect calculation.

Step S102, it is determined whether the movement speed falls into a preset speed range.

The user of the terminal may set at least one preset speed range in advance, and judge the movement speed of the object to be photographed according to the experience when taking photo, and then manually select the preset speed range. In addition, some shooting functions of the terminal may also be bound with different preset speed ranges, so that when the user selects a certain shooting function, the corresponding preset speed range is automatically selected, for example, the "character" shooting function corresponds to the preset speed range of 3 Km/h to 10 Km/h; the "vehicle" shooting function corresponds to the preset speed range of 20 Km/h to 200 Km/h; and for the cameras installed over the road which are used to catch speeders, the preset speed range may also be directly set to more than 180 Km/h., for example.

If the movement speed falls into the preset speed range, in step S103, the terminal camera focuses on the described object. Otherwise, the process ends.

The purpose of setting the preset speed ranges is to focus on the object of interest to the user. In the above example, if the user selects the "character" shooting function, the camera can only focus on the object with a speed falling into a range of about 3 Km/h ~ 10 Km/h, and vehicles with high speed behind the object or person can be directly ignored. Similarly, cameras installed over the road which are used to catch speeders are only interested in the vehicles with a speed of movement more than the preset speed, but vehicles, pedestrians or animals with a speed less than the preset speed can be directly ignored.

The object with the movement speed falling into the preset speed range is determined by the user by setting the preset speed range; therefore, the terminal camera can directly focus on that object. Focus modes may include turning the camera lens on the terminal, and also may include controlling the movement of the terminal relative to the object, for example the terminal is installed on the slide rail and the terminal's movement on the slide rail is controlled.

According to the method provided by this embodiment of the present disclosure, the movement speed of the object in the picture to be photographed is obtained, it is determined whether the movement speed falls into a preset speed range according to the movement speed, and the object in the picture to be photographed is focused on, if the speed falls into the preset speed range.

According to the method, the movement speed of the object in the picture to be photographed may serve as feedback and the focus process control may be controlled, therefore the terminal camera can automatically follow or "pan" the object and focus on the object when the object in the picture to be photographed is moving, so that the whole focusing process is more automatic and less time-consuming.

Compared with the prior art, because the actual focus process takes less time, the terminal camera can capture the best images or scenes in time during the movement of the object to be photographed, when the object to be photographed is moving.

In another embodiment of the present disclosure, after step S103 the method can also include the following steps, as shown in figure 2.

Step S104, taking photos or videos for the object after the object is focused on.

In the above steps S103, although focusing on the object is completed and the best image or scene during the movement of the object is captured, but as for photographing operation, only the preparation is finished. So after the step, it also needs to take photos or videos of the object after the object is focused on, so that the best image or scene during the movement of the object can be recorded.

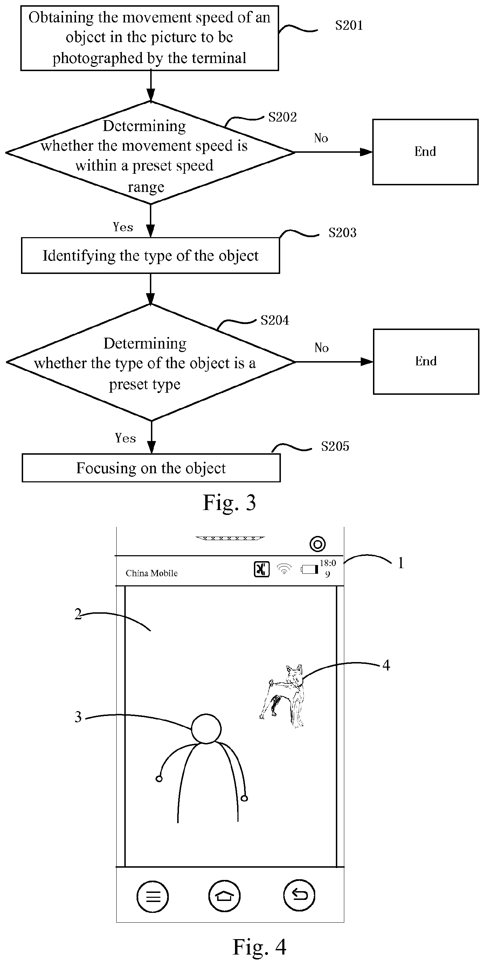

Fig. 3 is a flow chart showing a photographing control method according still another exemplary embodiment. As shown in Fig. 3, the photographing control method is used in the terminal, and comprises following steps.

Step 201, the movement speed of the object in the picture to be photographed by the terminal is obtained.

Step 202, it is determined whether the movement speed falls into a preset speed range.

If the movement speed is within the preset speed range, in step 203, the type of the object is determined. Otherwise, the process ends.

In the embodiment shown in figure 1, the focusing on the object is performed only if the movement speed of the object falls into the preset speed range, which can exclude the objects with the movement speed out of the preset speed range. However in practical applications, there may be two objects moving with a speed within the preset speed range, for example, when taking photos of a person, a small animal may run into the picture to be photographed, and the movement speeds of the small animal and the person are similar. As shown in Fig. 4, the figure includes a terminal 1, a picture to be photographed 2, a person 3 and a dog 4. Because the movement speed of the dog is close to that of the person, two or more objects in the picture to be photographed 2 are needed to be focused, and thus the focus process may fail.

Therefore, in the step in the embodiment of the present disclosure, the type of the object can be identified. In the actual identification process, the step can use the existing image recognition technology to identify the object, for example, face recognition, etc.

Step 204, it is determined whether the type of the object is a preset type.

The user can set multiple preset types in advance. The description of the preset type can refer to the description about the preset speed range in the embodiment shown if Fig. 1, the description of which is not repeated here.

If the type of the object is the preset type, in step 205, the terminal camera focuses on the object.

If the type of the object is the preset type, the process can directly end. For example, when taking photos to a person, if the person does not move, but a small animal is moving in the picture to be photographed, so it can be determined that the type of the little animal is not the preset type by the type identification, and it can be decided not to perform the adjustment of the focus length.

The method provided by this embodiment of the present disclosure can further identify the type of the object if there are multiple objects of which the movement speed are all meet the requirement in the picture to be photographed, and focus on the object only when its type is the preset type, so as to make the focus length more accurately.

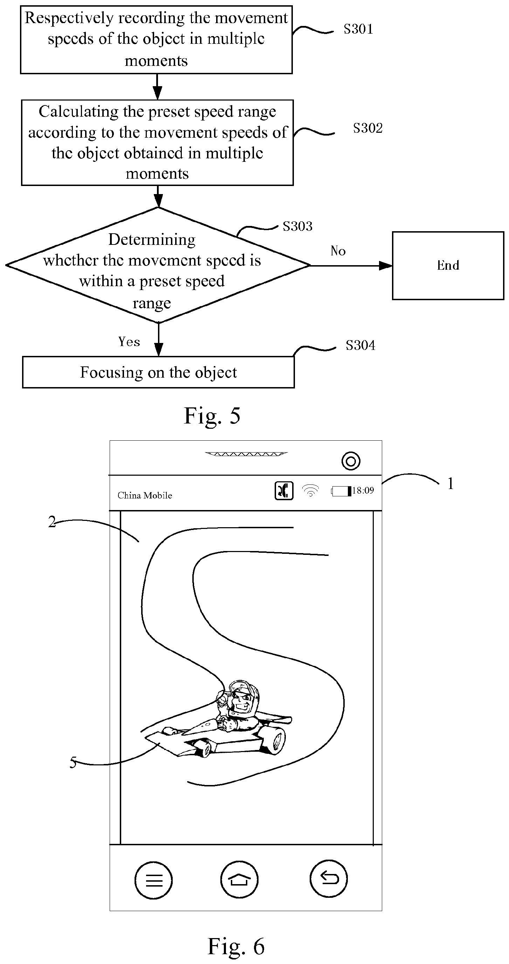

Fig. 5 is a flow chart showing a photographing control method according still another exemplary embodiment. As Fig. 5 shown, the photographing control method is used in the terminal, and comprises following steps.

Step 301, the movement speeds of the object are respectively recorded in multiple moments.

Step 302, a preset speed range is calculated according to the movement speeds of the object obtained in multiple moments.

Step 303, it is determined whether the movement speed falls into the preset speed range.

If the movement speed falls into the preset speed range, in step 304, the terminal camera focuses on the described object. Otherwise, the process ends.

In the above embodiments, the preset speed range is set in advance by the user. In the embodiments of the present disclosure, the movement speed of the object in the picture to be photographed can also be recorded continuously to calculate the preset speed range according to the recorded movement speeds of the object, which can make the preset speed range be amended according to the movement speed of the object, for example, as for a racing car, the preset speed range can be amended continuously from the starting step to the accelerating step of the racing car. As shown in Fig. 6, the number 5 in the figure indicates a racing car; so this method can be applied to an object of which the movement speed is changed greatly, and the object can be always focused on during the movement of the object.

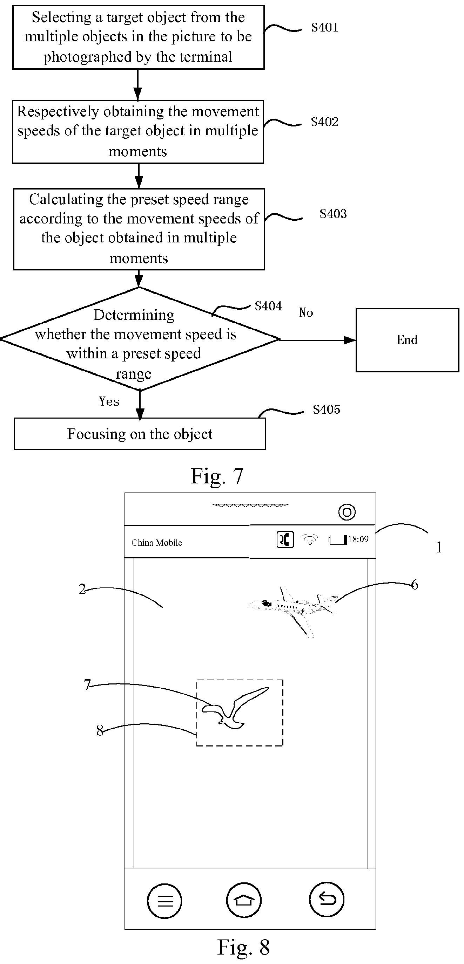

When there is more than one object in the picture to be photographed by the terminal, if the method shown in Fig. 5 is implemented, it is necessary to record the movement speeds of the multiple objects, and it is hard to focus on a certain object. Therefore, in the embodiment of the present disclosure, as shown in Fig. 7, the method may include the following steps.

Step 401, a target object is selected from multiple objects in the picture to be photographed by the terminal.

In this step, the object focused on currently in the picture to be photographed by the terminal can be selected as the target object. In addition, the target object can be selected by other ways, for example, the object located at the center area of the picture to be photographed of the terminal may be selected as the target object. As shown in Fig. 8, a plane 6 and a flying bird 7 are in the picture 2 to be photographed, and the current focus area is 8, so the selected target object is the flying bird in Fig. 8.

Step 402, the movement speeds of the target object are respectively obtained in multiple moments.

Step 403, a preset speed range is calculated according to the movement speeds of the object obtained in multiple moments.

Step 404, it is determined whether the movement speed falls into the preset speed range.

If the movement speed falls into the preset speed range, in step 405, the terminal camera focuses on the described object. Otherwise, the process ends.

The method provided by this embodiment of the present disclosure can select a target object from multiple objects in the picture to be photographed and determine a preset speed range according to the movement speeds of the object obtained in multiple moments, which can only continuously focus on one object in the picture to be photographed.

In the above methods in the embodiments of the present disclosure, when focusing on an object, the lens of the terminal can be controlled to rotate relative to the terminal, or the terminal can be controlled to move relative to the object.

In an embodiment, the object is focused on by rotating the lens may be performed in the following manners.
11) The rotation direction and the rotation distance of the lens of the terminal relative to the terminal are calculated according to the movement speed.
   In actual implementation, a corresponding relation between the movement speeds and the rotation direction and the rotation distance can be set in advance, and then in this step the rotation direction and the rotation distance can be calculated by table look-up. Of course, a formula also can be set in advance, and the rotation direction and the rotation distance can be calculated by inputting the movement speed into the formula.
   With the increase of the movement speed of the object, the rotation distance of the lens will also increase.
12) The lens is controlled to rotate relative to the terminal according to the calculated rotation direction and the rotation distance.
   In another embodiment, the object is focused on by moving the mobile terminal may be performed in the following manners.
21) The movement direction and the movement distance of the terminal relative to the object are calculated according to the movement speed.
   With the increase of the movement speed of the object, the movement distance of the terminal relative to the object will also increase.
22) The terminal is controlled to move relative to the object according to the calculated movement direction and the movement distance.
   In each above method embodiments disclosed in the present disclosure, the same steps can learn from each other, the different steps can be freely combined.

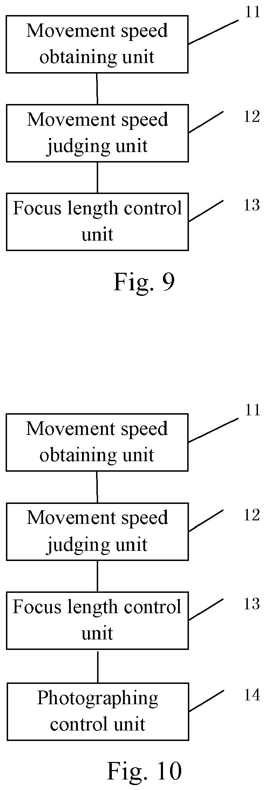

Fig. 9 is a block diagram showing a photographing control apparatus according to an exemplary embodiment. Referring to Fig. 9, the apparatus includes a movement speed obtaining unit 11, a movement speed determining unit 12 and a focus length control unit 13.

The movement speed obtaining unit 11 is configured to obtain the movement speed of an object in the picture to be photographed by the terminal.

In this embodiment of the present disclosure, the movement speed obtaining unit 11 can include a movement speed receiver sub-unit, a shift speed calculation sub-unit or a movement speed calculation sub-unit.

Wherein, the movement speed receiver sub-unit is configured to receive the movement speed of the entity corresponding to the object measured by a velocity measurement equipment.

The shift speed calculation sub-unit is configured to calculate the shift speed of the object in the picture to be photographed, which is taken as the movement speed.

The movement speed calculation sub-unit is configured to calculate the shift speed of the object in the picture to be photographed; to acquire the distance between the entity corresponding to the object and the terminal; and to calculate the movement speed of the object according to the shift speed and the distance.

The movement speed determining unit 12 is configured to determine whether the movement speed falls into a preset speed range.

The focus length control unit 13 is configured to focus on the object if the movement speed falls into the preset speed range.

In an embodiment of the present disclosure, the focus length control unit 13 includes a rotation parameter calculation sub-unit and a rotation control sub-unit.

The rotation parameter calculation sub-unit is configured to calculate the rotation direction and the rotation distance of the lens of the terminal relative to the terminal.

The rotation control sub-unit is configured to control the lens of the terminal to rotate relative to the terminal according to the calculated rotation direction and the rotation distance.

In another embodiment, the focus length control unit 13 includes a movement parameter calculation sub-unit and a movement control sub-unit.

The movement parameter calculation sub-unit is configured to calculate the movement direction and the movement distance of the terminal relative to the object.

The movement control sub-unit is configured to control the terminal to move relative to the object according to the calculated movement direction and the movement distance.

The apparatus provided by the embodiment of the present disclosure obtains the movement speed of the object in the picture, judges whether the movement speed is within a preset speed range as the basis of the movement speed, and focus on the object in the picture when the speed within the preset speed range.

Because this apparatus can take advantage of the movement speed of the object in the picture as feedback and control the focus process, the terminal camera can automatically follow the object and focus on the object, which makes the focus process more automatic and less time-consuming, when the object in the picture is moving.

Compared with the related technology, because the focus process takes less time, the terminal camera can capture the best images or scenes in time in the movement of the object to be photographed, when the object to be photographed is moving.

In another embodiment of the present disclosure, as shown in Fig. 10, the apparatus may further include a photographing control unit 14.

The photographing control unit 14 is configured to take photos or videos of the object, after focusing on it.

In the above embodiment, although focusing on the object is completed and the best image or scene in the movement of the object is captured, but as for photographing operation, only the preparation is finished. So after the steps, it also needs to take photos or videos for the object after the object is focused on, so that the best image or scene during the movement of the object can be recorded.

In another embodiment of the present disclosure, the apparatus can further include an identification unit and a type determining unit.

The identification unit is configured to identify the type of the object.

The type determining unit is configured to determine whether the type of the object is a preset type.

If the type of the object is the preset type, the focus length control unit 13 focuses on the object.

The apparatus provided by this embodiment of the present disclosure can further identify the type of the object if there are multiple objects of which the movement speed all meet the requirement in the picture to be photographed, and focus on the object only if the object type is the preset type, so as to make the focal length be more accurately determined.

In the above embodiments, the preset speed range is set in advance by the user. In the embodiments of the present disclosure, the movement speed of the object in the picture to be photographed can also be recorded continuously to calculate the preset speed range according to the movement speeds of the object in multiple records. Therefore, in another embodiment of the present disclosure, the apparatus can further include a first movement speed record unit and a first preset speed range obtaining unit.

The first movement speed record unit is configured to respectively record the movement speeds of the object in multiple moments.

The first preset speed range obtaining unit is configured to obtain a preset speed range according to the movement speeds of the object obtained in multiple moments.

When there is more than one object in the picture to be photographed by the terminal, if the method in the above embodiment is implemented, it is necessary to record the movement speeds of the multiple objects, and it is hard to focus on a certain object. Therefore, in another embodiment of the present disclosure, the apparatus can further include a target object selection unit, a second movement speed record unit and a second preset speed range obtaining unit.

The target object selection unit is configured to select a target object from multiple objects in the picture to be photographed by the terminal.

In the embodiments of the present disclosure, the target object selection unit can include a selection sub-unit which is configured to select the object focused on currently in the picture to be photographed by the terminal as the target object.

The second movement speed record unit is configured to respectively record the movement speeds of the target object in multiple moments.

The second preset speed range obtaining unit is configured to obtain a preset speed range according to the movement speeds of the target object obtained in multiple moments.

The apparatus provided by this embodiment of the present disclosure can select a target object from multiple objects in the picture to be photographed and determine a preset speed range according to the movement speeds of the object obtained in multiple moments, which can only continuously focus on one object in the picture.

As to the apparatuses in the above embodiments, the specific operation method of each module has been described in detail in the corresponding method embodiments, the description of which is not repeated here.

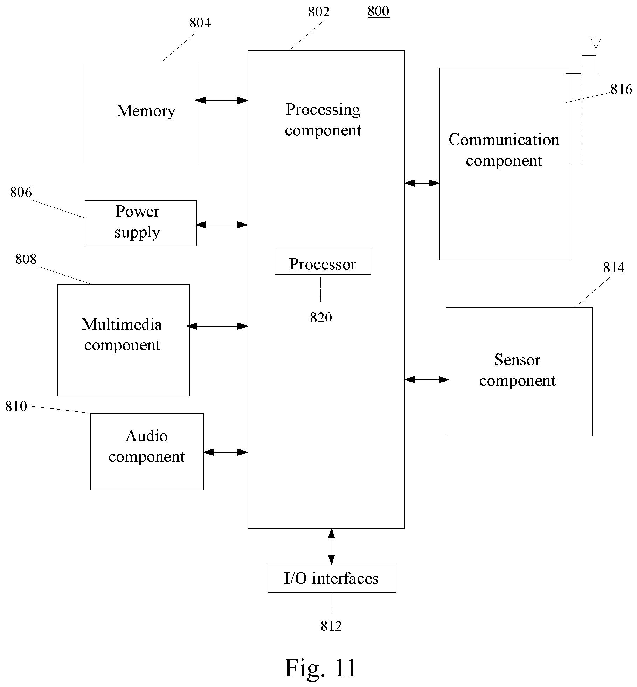

Fig. 11 is a block diagram showing a terminal according to another exemplary embodiment. For example, the terminal may be a mobile phone, a computer, a digital broadcasting terminal, a message transceiver, a game controller, a tablet device, a medical equipment, a fitness equipment or a personal digital assistant (PDA) etc.

Referring Fig. 11, the terminal 800 may include following one or more components: a processing component 802, a memory 804, a power supply 806, a multimedia component 808, an audio component 810, input/output (I/O) interfaces 812, a sensor component 814 and a communication component 816.

The processing component 802 usually controls the overall operations of the terminal 800, such as the operations associated with display, phone calls, data communication, camera operation and record. The processing component 802 may include one or more processor 802 to execute instructions, to complete all or part of the steps of the above method. In addition, the processing unit 802 may include one or more modules, to facilitate the interaction between the processing component 802 and the other components. For example, the processing component 802 may include a multimedia module, to facilitate the interaction between the multimedia component 808 and the processing component 802.

The memory 804 is configured to store various types of data to support the operation of the terminal 800. The examples of the data include the instructions of any application or method operated in the terminal 800, contact data, address book data, messages, pictures and video, etc. The memory 804 may be any type of volatile or non-volatile storage device or their combinations, such as a static random access memory (SRAM), an electrically erasable programmable read-only memory (EEPROM), an electrically programmable read-only memory (EPROM), a programmable read-only memory (PROM), a read-only memory (ROM), a magnetic memory, a flash memory, a magnetic disk or a light disk.

The power supply component 806 provides power for various components of the terminal 800. The power supply component 806 may include a power management system, one or more power supplies, and other components associated with generation, management and allocation of electricity for terminal 800.

The multimedia component 808 includes a screen as an output interface provided between the terminal 800 and users. In some embodiments, the screen may include a liquid crystal display (LCD) and a touch panel (TP). If the screen includes a touch panel, it may be implemented as a touch screen used to receive the input signal from users. The touch panel includes one or more touch sensors used to sense a touch, a slide or a gesture on the touch panel. The touch sensors may not only sense the boundaries of the touch or slide operation, but also detect the time of duration and the pressure associated with the touch or slide operation. In some embodiments, the multimedia component 800 includes a prepose (front-facing) camera and/or a postpose (rearward facing) camera. When the terminal 800 is in a operation mode, such as photographing mode or video mode, the prepose camera and/or the postpose camera may receive outer multimedia data. The prepose camera and the postpose camera may a fixed optical lens systems or have a focus length and the optical zoom capability.

The audio component 810 is configured to output and/or input audio signals. For example, the audio component 810 includes a microphone (MIC). When the terminal is in an operation mode, such as the calling mode, the recording mode or a voice recognition mode, the microphone is configured to receive the outer audio signals. The received audio signals may be further stored in the memory 804 or transmitted by the communication component 816. In some embodiments, the audio component 810 further includes a loudspeaker used to output the audio signals.

I/O interfaces 812 are configured to provide interfaces between the processing component 802 and external interface modules, which may be a keyboard, a click wheel, buttons etc. These buttons may include but not limited to a home button, volume buttons, a start button and a lock button.

The sensor component 814 includes one or more sensors used to provide various aspects of condition assessment for the terminal 800. The sensor component 814, for example, may detect the on/off state of the terminal 800, relative position of the components, such as a display and a keypad of the terminal 800, the sensor component 814 may also detect the position change of the terminal 800 or one component of the terminal 800, whether the touch between the user and the terminal 800 exists or not, the orientation or acceleration/deceleration of the terminal 800 and the temperature change of the terminal 800. The sensor component 814 may include a proximity sensor which is configured to detect near objects without any physical contact. The sensor component 814 may also include light sensors, such as CMOS or CCD image sensor, used in the imaging applications. In some embodiments, the sensor component 814 may also include acceleration sensors, gyroscope sensors, magnetic sensors, pressure sensors or temperature sensors.

The communication component 816 is configured to facilitate the wired or wireless communications between the terminal 800 and other devices. The terminal 800 can access to a wireless network based on a communication standard, such as WiFi, 2G or 3G, or their combinations. In an exemplary embodiment, the communication component 816 receives radio signals from external radio management system or broadcast information via a broadcast channel. In an exemplary embodiment, the communication component 816 also includes a near field communication (NFC) module, so as to promote the short-range communication. For example, the NFC module can be implemented based on radio frequency identification (RFID) technology, infrared data association (IrDA) technology, the ultra-wideband (UWB) technology, Bluetooth (BT) technology and other technologies.

In an exemplary embodiment, the terminal 800 may be implemented based on one or more application specific integrated circuits (ASIC), digital signal processor (DSP), digital signal processing device (DSPD), programmable logic device (PLD) and field programmable gate array (FPGA), controller, microcontroller, microprocessor and other electronic components used to perform the above methods.

In the exemplary embodiment, it further provides a non-temporary computer readable storage medium including instructions, such as the memory 804 including instructions, which can be performed by the processor 820 of the terminal 800 to complete the above methods. For example, the non-temporary computer readable storage medium may be a ROM, a random access memory (RAM), a CD-ROM, a tape, a floppy disk and an optical data storage device, etc.

A non-temporary computer readable storage medium is provided, when the instructions in the storage medium are carried out by the processor of mobile terminals to make the mobile terminal perform a photographing control method according to claims 1-7.

## Claims

1. An automatic focusing control method for use with a terminal equipped with a camera, comprising:
obtaining (S101, S201) a movement speed of an object in a picture to be photographed by the camera;
determining (S102, S202) whether the movement speed is within a preset speed range;and
focusing (S103, S205) on the object if the movement speed is within the preset speed range;
**characterized by**
recording respective movement speeds (S301) of the object in a plurality of moments; the preset speed range being calculated (S302, S303) according to said respective movement speeds of the object obtained in the plurality of moments, such that the preset speed range is amended continuously according to the movement speed of the object.

2. The method according to claim 1, wherein the method further comprises:
taking photo or video (S104) for the object after focusing (S103) on the object.

3. The method according to claim 1, wherein the method further comprises:
identifying (S203) a type of the object;
determining (S204) whether the type of the object is a preset type; and
focusing (S205) on the object if the type of the object is the preset type.

4. The method according to claim 1, wherein the picture to be photographed by the camera includes a plurality of objects; and
the method further comprises:
selecting (S401) a target object from the plurality of objects in the picture to be photographed by the camera;
respectively obtaining movement speeds (S402) of the target object in a plurality of moments; and
calculating (S403) a preset speed range according to the movement speeds of the object obtained in the plurality of moments.

5. The method according to claim 4, wherein selecting (S401) a target object from the plurality of objects in the picture to be photographed by the camera comprises:
selecting an object focused on currently in the picture to be photographed by the camera as the target object.

6. The method according to claim 1, wherein obtaining (S402) the movement speed of an object in the picture to be photographed by the camera comprises:
receiving a movement speed of an entity corresponding to the object measured by a velocity measurement;
or,
calculating a shift speed of the object in the picture to be photographed, and taking the shift speed as the movement speed of the object;
or,
calculating a shift speed of the object in the picture to be photographed, obtaining the distance between an entity corresponding to the object and the camera, and calculating the movement speed of the object according to the shift speed and the distance.

7. The method according to claim 1, wherein focusing (S405) on the object comprises:
causing the lens of the camera to rotate relative to the terminal;
calculating the rotation direction and rotation distance of the lens of the camera relative to the terminal according to the movement speed or increase of the movement speed of the object; and controlling the lens to rotate relative to the terminal according to the calculated rotation direction and the rotation distance.

8. A focusing control apparatus for a camera in a terminal, the focusing control apparatus comprising:
a movement speed obtaining unit (11) configured to obtain a movement speed of an object (3,4,5,6,7) in a picture to be photographed by the camera in the terminal;
a movement speed determining unit (12) configured to determine whether the movement speed is within a preset speed range;
a focus length control unit (13) configured to focus on the object if the movement speed is within the preset speed range;
**characterised by**
a first movement speed recording unit configured to record respective movement speeds of the object in a plurality of moments;
a first speed range obtaining unit configured to calculate (S302,S303) the preset speed range according to said respective movement speeds of the object obtained in the plurality of moments, such that the preset speed range is amended continuously according to the movement speed of the object.

9. The apparatus according to claim 8, wherein the apparatus further comprises:
a photographing control unit (14) configured to take a photo or video of the object after focusing on the object.

10. The apparatus according to claim 8, wherein the apparatus further comprises:
an identification unit configured to identify a type of the object; and
a type determining unit configured to determine whether the type of the object is a preset type;
wherein, the focus length control unit (13) focuses on the object if the type of the object is the preset type.

11. The apparatus according to claim 8, wherein the picture to be photographed by the camera in the terminal includes a plurality of objects; and
the apparatus further comprises:
a target object selection unit configured to select a target object from the plurality of objects in the picture to be photographed by the camera;
a second movement speed record unit configured to respectively record the movement speeds of the target object in the plurality of moments; and
a second preset speed range obtaining unit configured to obtain a preset speed range according to the movement speeds of the target object obtained in the plurality of moments.

12. The apparatus according to claim 11, wherein the target object selection comprises:
a selection sub-unit configured to select the object focused on currently in the picture to be photographed by the camera as the target object.

13. The apparatus according to claim 8, wherein the movement speed obtaining unit comprises:
a movement speed receiver sub-unit configured to receive the movement speed of an entity corresponding to the object measured by a velocity measurement equipment;
or,
a shift speed calculation sub-unit configured to calculate a shift speed of the object in the picture to be photographed, which is taken as the movement speed;
or,
a movement speed calculation sub-unit configured to calculate a shift speed of the object in the picture to be photographed; to obtain a distance between the entity corresponding to the object and the camera; and to calculate the movement speed of the object according to the shift speed and the distance.

14. The apparatus according to claim 8, comprising means to cause rotation of the lens of the camera relative to the terminal, wherein the focus length control unit comprises:
a rotation parameter calculation sub-unit configured to calculate a rotation direction and a rotation distance of a lens of the camera relative to the terminal, and a rotation control sub-unit configured to control the lens of the camera to rotate relative to the terminal according to the calculated rotation direction and the rotation distance.

15. A computer program, which when executing on a processor of a terminal with a camera, performs a method according to any one of claims 1 to 7.

## Patentansprüche

1. Automatisches Fokussier-Steuerverfahren zur Verwendung mit einem mit einer Kamera ausgerüsteten Terminal, umfassen:
Erhalten (S101, S201) einer Bewegungsgeschwindigkeit eines Objektes in einem durch die Kamera zu fotografierenden Bild;
Bestimmen (S102, S202) ob die Bewegungsgeschwindigkeit innerhalb eines vorbestimmten Geschwindigkeitsbereiches liegt; und
Fokussieren (S103, S205) auf das Objekt, falls die Bewegungsgeschwindigkeit innerhalb des vorbestimmten Geschwindigkeitsbereiches liegt; **gekennzeichnet durch**
Abspeichern jeweiliger Bewegungsgeschwindigkeiten (S301) des Objektes in einer Mehrzahl von Momenten; wobei der vorbestimmte Geschwindigkeitsbereich gemäß der besagten jeweiligen Bewegungsgeschwindigkeiten des Objektes kalkuliert (S302, S303) wird, wie sie in der Mehrzahl von Momenten erhalten werden, derart, dass der vorbestimmte Geschwindigkeitsbereich kontinuierlich gemäß der Bewegungsgeschwindigkeit des Objektes abgeändert wird.

2. Verfahren nach Anspruch 1, wobei das Verfahren ferner umfasst:
Erstellen einer Fotoaufnahme oder eines Videos (S104) für das Objekt nachfolgend dem Fokussieren (S103) auf das Objekt.

3. Verfahren nach Anspruch 1, wobei das Verfahren ferner umfasst:
Identifizierten (S203) eines Typs des Objektes;
Bestimmen (S204), ob der Typ des Objektes ein vorbestimmter Typ ist; und
Fokussieren (S205) auf das Objekt, falls der Typ des Objektes der vorbestimmte Typ ist.

4. Verfahren nach Anspruch 1, wobei das durch die Kamera zu fotografierende Bild eine Mehrzahl von Objekten umfasst; und das Verfahren ferner umfasst:
Auswählen (S401) eines Zielobjektes aus der Mehrzahl an Objekten in dem durch die Kamera zu fotografierenden Bild;
Jeweiliges Erhalten von Bewegungsgeschwindigkeiten (S402) des Zielobjektes in einer Mehrzahl von Momenten; und
Berechnen (S403) eines vorbestimmten Geschwindigkeitsbereiches gemäß den Bewegungsgeschwindigkeiten des Objektes, wie sie in der Mehrzahl an Momenten erhalten werden.

5. Verfahren nach Anspruch 4, wobei das Auswählen (S401) eines Zielobjektes aus der Mehrzahl von Objekten in dem durch die Kamera zu fotografierenden Bild umfasst:
Auswählen eines Objekts als das Zielobjekt, auf das gegenwärtig in dem durch die Kamera zu fotografierenden Bild fokussiert wird.

6. Verfahren nach Anspruch 1, wobei ein Erhalten (S402) der Bewegungsgeschwindigkeit eines Objektes in dem durch die Kamera zu fotografierenden Bildes umfasst:
Erhalten einer Bewegungsgeschwindigkeit einer Entität entsprechend dem durch die Geschwindigkeitsmessung zu vermessenden Objekt;
oder
Berechnen einer Änderungsgeschwindigkeit des in dem Bild zu fotografierenden Objektes, und Nehmen der Änderungsgeschwindigkeit als die Bewegungsgeschwindigkeit des Objektes;
oder
Berechnen einer Änderungsgeschwindigkeit des Objektes in dem zu fotografierenden Bild, Erhalten des Abstands zwischen einer Entität entsprechend dem Objekt und der Kamera, und Berechnen der Bewegungsgeschwindigkeit des Objektes gemäß der Änderungsgeschwindigkeit und dem Abstand.

7. Verfahren nach Anspruch 1, wobei das Fokussieren (S405) auf das Objekt umfasst:
Veranlassen einer Rotation der Linse der Kamera relativ zu dem Terminal;
Berechnen der Rotationsrichtung und des Rotationsabstandes der Linse der Kamera relativ zu dem Terminal gemäß der Bewegungsgeschwindigkeit oder einer Erhöhung der Bewegungsgeschwindigkeit des Objektes; und Steuern der Linse zur Rotation relativ zu dem Terminal gemäß der berechneten Rotationsrichtung und des Rotationsabstandes.

8. Fokussier-Steuerapparatur für eine Kamera in einem Terminal, wobei die Fokussier-Steuerapparatur aufweist:
eine Bewegungsgeschwindigkeits-Aufnahmeeinheit (11), die dazu konfiguriert ist, eine Bewegungsgeschwindigkeit eines Objektes (3, 4, 5, 6, 7) in einem durch die Kamera in dem Terminal zu fotografierenden Bild aufzunehmen;
eine Bewegungsgeschwindigkeits-Bestimmungseinheit (12), die dazu konfiguriert ist, zu bestimmen, ob die Bewegungsgeschwindigkeit innerhalb eines vorbestimmten Geschwindigkeitsbereiches liegt;
eine Fokuslängen-Steuereinheit (13) die dazu konfiguriert ist, auf das Objekt zu fokussieren, falls die Bewegungsgeschwindigkeit innerhalb des vorbestimmten Geschwindigkeitsbereiches liegt;
**gekennzeichnet durch**
eine erste Bewegungsgeschwindigkeits-Speichereinheit, die dazu konfiguriert ist, jeweilige Bewegungsgeschwindigkeiten des Objektes in einer Mehrzahl von Momenten abzuspeichern;
eine erste Geschwindigkeitsbereichs-Aufnahmeeinheit, die dazu konfiguriert ist, den vorbestimmten Geschwindigkeitsbereich gemäß der jeweiligen Bewegungsgeschwindigkeiten des Objektes zu berechnen (S302, S303), wie sie in der Mehrzahl an Momenten erhalten werden, derart, dass der vorbestimmte Geschwindigkeitsbereich kontinuierlich gemäß der Bewegungsgeschwindigkeit des Objektes abgeändert wird.

9. Apparatur gemäß Anspruch 8, wobei die Apparatur ferner aufweist:
eine Fotografier-Steuereinheit (14), die dazu konfiguriert ist, eine Fotoaufnahme oder ein Video des Objektes nachfolgend einem Fokussieren auf das Objekt zu nehmen.

10. Apparatur gemäß Anspruch 8, wobei die Apparatur ferner aufweist:
eine Identifikationseinheit, die dazu konfiguriert ist, einen Typ des Objektes zu identifizieren; und
eine Typen-Bestimmungseinheit, die dazu konfiguriert ist, zu bestimmen ob der Typ des Objektes ein vorbestimmter Typ ist;
wobei die Fokuslängen-Steuereinheit (13) auf das Objekt fokussiert, falls der Typ des Objektes der vorbestimmte Typ ist.

11. Apparatur gemäß Anspruch 8, wobei das durch die Kamera in dem Terminal zu fotografierende Bild eine Mehrzahl an Objekten umfasst; und die Apparatur ferner aufweist:
eine Zielobjekt-Auswahleinheit, die dazu konfiguriert ist, ein Zielobjekt aus der Mehrzahl an Objekten in dem durch die Kamera zu fotografierenden Bild auszuwählen;
eine zweite Bewegungsgeschwindigkeits-Speichereinheit, die dazu konfiguriert ist, jeweils die Bewegungsgeschwindigkeiten des Zielobjektes in der Mehrzahl an Momenten abzuspeichern; und
eine zweite Vorbestimmungs-Geschwindigkeitsbereichs-Aufnahmeeinheit, die dazu konfiguriert ist, einen vorbestimmten Geschwindigkeitsbereich gemäß der Bewegungsgeschwindigkeiten des Zielobjektes aufzunehmen, wie sie in der Mehrzahl an Momenten erhalten werden.

12. Apparatur gemäß Anspruch 11, wobei die Zielobjekt-Auswahl umfasst:
eine Auswahl-Subeinheit, die dazu konfiguriert ist, das Objekt auszuwählen, auf das gegenwärtig in dem durch die Kamera zu fotografierenden Bild als das Zielobjekt fokussiert wird.

13. Apparatur gemäß Anspruch 8, wobei die Bewegungsgeschwindigkeits-Aufnahmeeinheit aufweist:
eine Bewegungsgeschwindigkeits-Receiver-Subeinheit, die dazu konfiguriert ist, die Bewegungsgeschwindigkeit einer Entität entsprechend dem Objekt aufzunehmen, wie es durch eine Geschwindigkeitsmessungs-Ausrüstung vermessen wird;
oder
eine Änderungsgeschwindigkeits-Berechnungs-Subeinheit, die dazu konfiguriert ist, eine Änderungsgeschwindigkeit des Objektes in dem zu fotografierenden Bild zu berechnen, die als die Bewegungsgeschwindigkeit genommen wird;
oder
eine Bewegungsgeschwindigkeits-Berechnungs-Subeinheit, die dazu konfiguriert ist, eine Änderungsgeschwindigkeit des Objektes in dem zu fotografierenden Bild zu berechnen; um einen Abstand zwischen der Entität entsprechend dem Objekt und der Kamera zu erhalten; und die Bewegungsgeschwindigkeit des Objektes gemäß der Änderungsgeschwindigkeit und dem Abstand zu berechnen.

14. Apparatur gemäß Anspruch 8, aufweisend Mittel zum Veranlassen einer Rotation der Linse der Kamera relativ zu dem Terminal, wobei die Fokuslängen-Steuereinheit aufweist:
eine Rotationsparameter-Berechnungs-Subeinheit, die dazu konfiguriert ist, eine Rotationsrichtung und einen Rotationsabstand einer Linse der Kamera relativ zu dem Terminal zu berechnen, sowie eine Rotations-Steuerungs-Subeinheit, die dazu konfiguriert ist, die Linse der Kamera für eine Rotation relativ zu dem Terminal gemäß der berechneten Rotationsrichtung und dem Rotationsabstand zu steuern.

15. Computerprogramm, das beim Ausführen auf einem Prozessor eines Terminals mit einer Kamera ein Verfahren gemäß einem der Ansprüche 1 - 7 ausführt.

## Revendications

1. Procédé de commande de mise au point automatique destiné à être utilisé avec un terminal équipé d'un appareil photo, qui comprend :
l'obtention (S101, S201) d'une vitesse de mouvement d'un objet sur une photo prise par l'appareil photo ;
la détermination (S102, S202) du fait que la vitesse de mouvement se trouve ou non dans des limites de vitesse prédéfinies ; et
la mise au point (S103, S205) sur l'objet si la vitesse de mouvement se trouve dans les limites de vitesse prédéfinies ;
**caractérisé par**
l'enregistrement des vitesses de mouvement respectives (S301) de l'objet à une pluralité de moments ;
les limites de vitesse prédéfinies étant calculées (S302, S303) selon lesdites vitesses de mouvement respectives de l'objet obtenues à la pluralité de moments, de sorte que les limites de vitesse prédéfinies soient modifiées en continu selon la vitesse de mouvement de l'objet.

2. Procédé selon la revendication 1, qui comprend en outre :
la prise d'une photo ou d'une vidéo (S104) de l'objet après la mise au point (S103) sur l'objet.

3. Procédé selon la revendication 1, qui comprend en outre :
l'identification (S203) d'un type de l'objet ;
la détermination (S204) du fait que le type de l'objet soit un type prédéfini ou non ; et
la mise au point (S205) sur l'objet si le type de l'objet est le type prédéfini.

4. Procédé selon la revendication 1, dans lequel la photo prise par l'appareil photo comprend une pluralité d'objets ; et
le procédé comprenant en outre :
la sélection (S401) d'un objet cible parmi la pluralité d'objets de la photo prise par l'appareil photo ;
l'obtention respective des vitesses de mouvement (S402) de l'objet cible à la pluralité de moments ; et
le calcul (S403) de limites de vitesse prédéfinies selon les vitesses de mouvement de l'objet obtenues à la pluralité de moments.

5. Procédé selon la revendication 4, dans lequel la sélection (S401) d'un objet cible parmi la pluralité d'objets de la photo prise par l'appareil photo comprend :
la sélection d'un objet mis au point sur la photo prise par l'appareil photo comme objet cible.

6. Procédé selon la revendication 1, dans lequel l'obtention (S402) de la vitesse de mouvement d'un objet sur la photo prise par l'appareil photo comprend :
la réception d'une vitesse de mouvement d'une entité qui correspond à l'objet mesurée par une mesure de vitesse ; ou
le calcul d'une vitesse de déplacement de l'objet sur la photo prise, et le fait de considérer la vitesse de déplacement comme la vitesse de mouvement de l'objet ; ou
le calcul d'une vitesse de déplacement de l'objet sur la photo prise, l'obtention de la distance entre une entité qui correspond à l'objet et l'appareil photo, et le calcul de la vitesse de mouvement de l'objet selon la vitesse de déplacement et la distance.

7. Procédé selon la revendication 1, dans lequel la mise au point (S405) sur l'objet comprend :
la rotation de la lentille de l'appareil photo par rapport au terminal ;
le calcul de la direction et de la distance de rotation de la lentille de l'appareil photo par rapport au terminal selon la vitesse de mouvement ou l'augmentation de la vitesse de mouvement de l'objet ; et le contrôle de la lentille afin qu'elle tourne par rapport au terminal selon la direction et la distance de rotation calculées.

8. Appareil de commande de mise au point destiné à un appareil photo placé dans un terminal, l'appareil de commande de mise au point comprenant :
une unité d'obtention de vitesse de mouvement (11) configurée pour obtenir une vitesse de mouvement d'un objet (3, 4, 5, 6, 7) sur une photo prise par l'appareil photo du terminal ;
une unité de détermination de vitesse de mouvement (12) configurée pour déterminer si la vitesse de mouvement se trouve dans des limites de vitesse prédéfinies ou non ;
une unité de commande de longueur de mise au point (13) configurée pour effectuer une mise au point sur l'objet si la vitesse de mouvement se trouve dans les limites de vitesse prédéfinies ;
**caractérisé par**
une première unité d'enregistrement de vitesse de mouvement configurée pour enregistrer les vitesses de mouvement respectives de l'objet à une pluralité de moments ;
une première unité d'obtention de limites de vitesse configurée pour calculer (S302, S303) les limites de vitesse prédéfinies selon lesdites vitesses de mouvement respectives de l'objet obtenues à la pluralité de moments, de sorte que les limites de vitesse prédéfinies soient modifiées en continu selon la vitesse de mouvement de l'objet.

9. Appareil selon la revendication 8, qui comprend en outre :
une unité de commande de photographie (14) configurée pour prendre une photo ou une vidéo de l'objet après la mise au point sur l'objet.

10. Appareil selon la revendication 8, l'appareil comprenant en outre :
une unité d'identification configurée pour identifier un type de l'objet ; et
une unité de détermination de type configurée pour déterminer si le type de l'objet est un type prédéfini ou non ;
dans lequel l'unité de commande de longueur de mise au point (13) fait la mise au point sur l'objet si le type de l'objet est le type prédéfini.

11. Appareil selon la revendication 8, dans lequel la photo prise par l'appareil photo du terminal comprend une pluralité d'objets ; et
l'appareil comprenant en outre :
une unité de sélection d'objet cible configurée pour sélectionner un objet cible parmi la pluralité d'objets de la photo prise par l'appareil photo ;
une seconde unité d'enregistrement de vitesse de mouvement configurée pour enregistrer respectivement les vitesses de mouvement de l'objet cible à la pluralité de moments ; et
une seconde unité d'obtention de limites de vitesse prédéfinies configurée pour obtenir des limites de vitesse prédéfinies selon les vitesses de mouvement de l'objet cible obtenues à la pluralité de moments.

12. Appareil selon la revendication 11, dans lequel la sélection de l'objet cible comprend :
une sous-unité de sélection configurée pour sélectionner l'objet mis au point sur la photo prise par l'appareil photo comme objet cible.

13. Appareil selon la revendication 8, dans lequel l'unité d'obtention de vitesse de mouvement comprend :
une sous-unité de récepteur de vitesse de mouvement configurée pour recevoir la vitesse de mouvement d'une entité qui correspond à l'objet mesurée par un équipement de mesure de vitesse ; ou
une sous-unité de calcul de vitesse de déplacement configurée pour calculer une vitesse de déplacement de l'objet sur la photo prise, qui est considérée comme la vitesse de mouvement ; ou
une sous-unité de calcul de vitesse de mouvement configurée pour calculer une vitesse de déplacement de l'objet sur la photo prise ; pour obtenir une distance entre l'entité qui correspond à l'objet et l'appareil photo ; et pour calculer la vitesse de mouvement de l'objet selon la vitesse de déplacement et la distance.

14. Appareil selon la revendication 8, qui comprend un moyen de rotation de la lentille de l'appareil photo par rapport au terminal, l'unité de commande de longueur de mise au point comprenant :
une sous-unité de calcul de paramètre de rotation configurée pour calculer une direction et une distance de rotation d'une lentille de l'appareil photo par rapport au terminal, et une sous-unité de commande de rotation configurée pour contrôler la lentille de l'appareil photo afin qu'elle tourne par rapport au terminal selon la direction et la distance de rotation calculées.

15. Programme informatique, qui, lorsqu'il est exécuté sur un processeur d'un terminal muni d'un appareil photo, exécute un procédé selon l'une quelconque des revendications 1 à 7.
